# EUROPEAN PATENT APPLICATION

(11) **EP 4 491 492 A1**
(43) Date of publication of application: **15.01.2025**
(21) Application number: 24180956.5
(22) Date of filing: 10.06.2024
(51) Int. Cl.: B62D 5/04

(54) **A VEHICLE STEERING SYSTEM AND METHOD FOR CONTROLLING VEHICLE STEERING**

(30) Priority: 11.07.2023 CN 202310845754
(71) Applicant: Robert Bosch GmbH, 70442 Stuttgart (DE)
(72) Inventor: SHA, Jinyi, Jiangsu, 215021 (CN); Schnelle, Fabian, 71229 Leonberg (DE); ENGLERT, Andreas, Jiangsu, 215021 (CN); LI, Spark, Jiangsu, 215021 (CN); SUN, Nan, Jiangsu, 215021 (CN); Yu, Xiangpeng, Jiangsu, 215021 (CN)

(57) **Abstract**

The present disclosure relates to the field of vehicles, particularly to a vehicle steering system (1), comprising: a first control unit (11) configured to perform the steering function of the vehicle; a status detection unit (12) configured to detect the operational state of the first control unit (11); and at least one second control unit (13) configured to participate in the control of the steering function of the vehicle in the event that an abnormal operational state of the first control unit (11) is detected. The present disclosure also relates to a method and a computer program product for controlling vehicle steering. According to the present disclosure, not only can redundancy for the steering system be provided to high-level autonomous driving systems and/or assisted driving system, especially achieving redundant design for steer-by-wire systems and ensuring safety when the vehicle is in motion, but it can also effectively enhance the stability and comfort of vehicle steering.

## Description

### Technical Field

The present disclosure relates to the field of vehicles, particularly to a vehicle steering system, a method for controlling vehicle steering, and a computer program product designed to at least assist in implementing the steps of the method according to the present disclosure.

### Background Art

In traditional vehicle steering systems, such as hydraulic steering systems or electronic power steering (EPS) systems, the steering wheel is always mechanically connected to the front wheels of the vehicle. This allows the driver to control the vehicle's steering even in the event of hydraulic or EPS failure.

With the development of vehicle technology, vehicle steering systems have gradually evolved into steer-by-wire systems. In steer-by-wire systems, the transmission part of the steering column is eliminated, leading to complete decoupling between the input control signal from the steering wheel and the actuator of the front wheels, and the input control signal from the steering wheel needs to be transmitted to the actuator of the front wheels through a steer-by-wire signal transmission unit. However, even when a steer-by-wire system itself is set up for redundancy, some electronic components of the steer-by-wire system may still fail, and steering control malfunctions may occur due to the failure of these electronic components while the vehicle is in motion, thus affecting the driving safety of the vehicle.

Therefore, how to set up a reliable vehicle steering system has become a current technical challenge that needs to be addressed.

### Summary of the Invention

The object of the present disclosure is to provide a vehicle steering system, a method for controlling vehicle steering, and a computer program product to address the problems in the prior art.

According to a first aspect of the present disclosure, a vehicle steering system is provided, comprising:
- a first control unit configured to perform the steering function of a vehicle;
- a status detection unit configured to detect the operational state of the first control unit; and
- and at least one second control unit configured to participate in the control of the steering function of the vehicle in the event that an abnormal operational state of the first control unit is detected.

The core idea of the present disclosure is as follows: in the event of an abnormal operational state in the vehicle's primary steering system, backup control units such as an electronic stability program system, rear-wheel steering system, and/or torque vectoring control system, which have steering control functions, can be activated to participate in the control of the vehicle's steering function. According to examples of the present disclosure, not only can redundancy for the steering system be provided to high-level autonomous driving systems and/or assisted driving system, especially achieving redundant design for steer-by-wire systems and ensuring safety when the vehicle is in motion, but it can also effectively enhance the stability and comfort of vehicle steering.

According to one optional example of the present disclosure, the first control unit may comprise an EPS system or a steer-by-wire system. Optionally, the at least one second control unit comprises one or more of the following components: an electronic stability program system, rear-wheel steering system, and torque vectoring system.

According to another optional example of the present disclosure, the electronic stability program system controls the braking torque of each wheel on the same side of the vehicle to steer the vehicle in the desired steering direction, wherein braking force is applied separately to each wheel on the same side or one wheel on the same side using a hydraulic braking mechanism and/or a friction-based electromechanical braking mechanism. Optionally, when oversteer is detected, the electronic stability program system applies braking force to one or more wheels on the side of the desired steering direction of the vehicle, so as to apply a lateral torque to the vehicle body towards the desired steering direction. Optionally, when oversteer is detected, the electronic stability program system applies braking force to one or more wheels on the side opposite to the desired steering direction of the vehicle, so as to apply a lateral torque to the vehicle body in a direction opposite to the desired steering direction.

According to another optional example of the present disclosure, the rear-wheel steering system controls the rear-wheel steering angle of the vehicle, such that the vehicle is steered towards the desired steering direction, wherein the direction of the rear-wheel steering angle is opposite to the desired steering direction.

According to another optional example of the present disclosure, the driving parameters and/or braking parameters of each wheel on each side of the vehicle are controlled through the torque vectoring control system. For example, braking force is applied separately to each wheel on one side of the vehicle either through the torque vectoring control system or the braking system, while driving force is applied to each wheel on the other side of the vehicle through the torque vectoring control system, such that the vehicle is steered towards the desired steering direction.

According to another optional example of the present disclosure, the driving parameters and/or braking parameters of each wheel on each side of the vehicle are synergistically controlled by the torque vectoring control system and the electronic stability program system, such that the vehicle is steered towards the desired steering direction, wherein the torque vectoring control system controls the driving parameters and/or braking parameters of each wheel on each side of the vehicle, and the electronic stability program system participates in the control of the braking operation of each wheel on at least one side of the vehicle.

According to another optional example of the present disclosure, the driving parameters and/or braking parameters of each wheel on each side of the vehicle is synergistically controlled by the electronic stability program system and the rear-wheel steering system, such that the vehicle is steered towards the desired steering direction, wherein the electronic stability program system controls the braking torque of each wheel on the same side of the vehicle, and the rear-wheel steering system controls the rear-wheel steering angle of the vehicle.

According to another optional example of the present disclosure, the driving parameters and/or braking parameters of each wheel on each side of the vehicle are synergistically controlled by the torque vectoring control system and the rear-wheel steering system, such that the vehicle is steered towards the desired steering direction, wherein the torque vectoring control system controls the driving parameters and/or braking parameters of each wheel on each side of the vehicle, and the rear-wheel steering system controls the rear-wheel steering angle of the vehicle.

According to another optional example of the present disclosure the desired steering direction may be determined according to the driver's operational instructions and/or determined according to an autonomous driving system and/or an assisted driving system based on the current driving scenario.

According to a second aspect of the present disclosure, a method for controlling vehicle steering is provided, wherein the method is executed using the vehicle steering system according to the present disclosure, and the method comprises the following steps:
- detecting the operational state of the first control unit used to perform the steering function of the vehicle;
- determining whether there is an abnormal operational state of the first control unit; and
- if an abnormal operational state of the first control unit is detected, activating at least one second control unit to participate in controlling the steering function of the vehicle.

According to a third aspect of the present disclosure, a computer program product is provided, such as a computer-readable program carrier comprising computer program instructions, wherein the execution of the computer program instructions by a processor at least assists in implementing the steps of the method according to the present disclosure.

### Description of Accompanying Drawings

In the following, the present disclosure is described in greater detail with reference to the accompanying drawings to provide a better understanding of its principles, features, and advantages. The accompanying drawings comprise the following:
FIG. 1 shows a structural block diagram of a vehicle steering system according to an exemplary example of the present disclosure;
FIG. 2 shows a flowchart of a method for controlling vehicle steering according to an exemplary example of the present disclosure;
FIG. 3 shows a schematic diagram of the principle by which the electronic stability program system participates in the control of the vehicle's steering function according to another exemplary example of the present disclosure;
FIG. 4 shows a schematic diagram of the principle by which the electronic stability program system participates in the control of the vehicle's steering function according to another exemplary example of the present disclosure;
FIG. 5 shows a schematic diagram of the principle by which the rear-wheel steering system participates in the control of the vehicle's steering function according to another exemplary example of the present disclosure;
FIG. 6 shows a schematic diagram of the principle by which the rear-wheel steering system and electronic stability program system participates in the control of the vehicle's steering function according to another exemplary example of the present disclosure;
FIG. 7 shows a schematic diagram of the principle by which the rear-wheel steering system participates in the control of the vehicle's steering function according to another exemplary example of the present disclosure;
FIG. 8 shows a schematic diagram of the principle by which the torque vectoring control system participates in the control of the vehicle's steering function according to another exemplary example of the present disclosure;
FIG. 9 shows a schematic diagram of the principle by which the torque vectoring control system and rear-wheel steering system participates in the control of the vehicle's steering function according to another exemplary example of the present disclosure.

### Specific Embodiments

To provide a clearer understanding of the technical problems, technical solutions, and beneficial technical effects to be addressed by the present disclosure, the following detailed description of the present disclosure will be provided with reference to the accompanying drawings and multiple exemplary examples. It should be understood that the specific examples described herein are provided solely for the purpose of explaining the present disclosure and not for limiting the scope of protection of the present disclosure.

It should be noted that in this document, terms such as "first," "second," etc., are used for descriptive purposes only and should not be construed as indicating or implying relative importance. Furthermore, such terms should not be understood as implying a specific quantity of the indicated technical features.

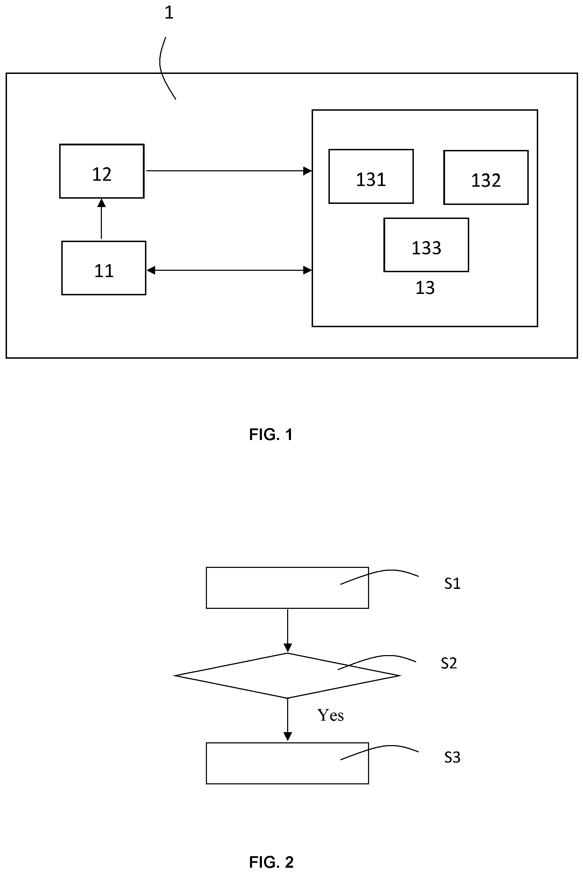

FIG. 1 shows a structural block diagram of a vehicle steering system according to an exemplary example of the present disclosure.

As shown in FIG. 1, the vehicle steering system 1 may comprise a first control unit 11 configured to perform the steering function of the vehicle. In the current example of the present disclosure, the first control unit 11 may be understood as the primary steering system of the vehicle, which takes over the control of the vehicle's steering function during the normal operation of the vehicle.

The first control unit 11 may comprise, for example, an EPS system and its components thereof, including, for example, a mechanical steering mechanism, a torque sensor, a vehicle speed sensor, an electronic control unit, and an electric motor. The operating principles of the EPS system are set forth below: The steering wheel is connected to the front wheels through a mechanical steering mechanism. When the driver turns the steering wheel, the torque sensor detects the direction and magnitude of the steering force and converts it into an electrical signal, which is then transmitted to the electronic control unit. The electronic control unit, based on these electrical signals and the vehicle speed signal detected by the vehicle speed sensor, sends control signals to the electric motor. This allows the electric motor to output steering assist torque of the appropriate magnitude and direction to the mechanical steering mechanism, providing steering assistance adapted to the current vehicle speed.

The first control unit 11 may also comprise, for example, a steer-by-wire system that, unlike a conventional vehicle steering system, eliminates the mechanical connection mechanism between the steering wheel and the actuator, and the vehicle's steering function is entirely implemented by an electronic control system. The components of the steer-by-wire system comprise, for example, a steering wheel module, a steering actuator, and an electronic control unit, the operating principles of which are set forth below: The steering wheel module measures the steering wheel angle to obtain the driver's steering intention, converts it into a digital signal, and transmits it to the electronic control unit. At the same time, the electronic control unit sends corresponding torque control signals and generates steering wheel positioning torque through the steering wheel positioning torque motor to provide the driver with corresponding road feedback information. The electronic control unit also outputs control signals to the steering actuator based on the collected signals, thereby controlling the steering motor to output the torque required for steering, and realizing the driver's steering intention.

It is understood that in a steer-by-wire system, the steering wheel is decoupled from the actuator. Once the electronic components in the steer-by-wire system that are not set up for redundancy fail, the steering operation cannot be realized. Therefore, redundancy design is necessary in a steer-by-wire system.

The vehicle steering system 1 as described may also comprise a status detection unit 12 and at least one second control unit 13, wherein the status detection unit 12 is configured to detect the operational state of the first control unit 11, while the second control unit 13 is configured to participate in controlling the vehicle's steering function when an abnormal operational state of the first control unit 11 is detected.

The operating principles of the vehicle steering system 1 are described in detail below in conjunction with the flowchart of a method for controlling vehicle steering according to an exemplary example of the present disclosure as illustrated in FIG. 2.

The method may comprise steps S1 to S3. In step S1, an operational state of the first control unit 11 for performing the steering function of the vehicle may be detected, in particular, by the status detection unit 12. In the context of the present disclosure, the operational state of the first control unit 11 may be divided into a normal operational state and an abnormal operational state, wherein when the first control unit 11 is in the normal operational state, it can steer the vehicle towards the desired direction based on the driver's steering intention, and wherein the desired steering direction may be determined based on the driver's operational instructions or by an autonomous driving system and/or assisted driving system based on the current driving scenario. When the first control unit 11 is in the abnormal operational state, it can no longer steer the vehicle towards the desired direction based on the driver's steering intention, i.e., it can only partially participate in the vehicle's steering control (e.g., when the output torque of the main steering system is less than the torque determined based on the driver's operational instructions), or it may not be able to participate in the vehicle's steering control at all. This is especially true when the first control unit 11 malfunctions (e.g., due to sensor failure, electronic control unit failure, steering motor failure, power supply unit power loss, etc.), resulting in the inability of the first control unit 11 to perform the vehicle's steering function.

In step S2, it is determined whether there is an abnormal operational state of the first control unit 11. If an abnormal operational state of the first control unit 11 is detected, at least one second control unit 13 is activated in step S3 to participate in controlling the steering function of the vehicle. Especially for high-level (e.g. SAE Level 2 and above) autonomous driving systems and/or assisted driving systems, the redundancy of the vehicle's steering system is mandatory to cover the back-up time required to bring the vehicle back to a safe state in case of a loss of control of the steering system itself. If the output parameters of the main steering system of the vehicle are unable to meet the requirements of relevant laws/regulations regarding the redundancy of the steering system, or the output parameters of the main steering system of the vehicle are unable to meet the requirements regarding driving comfort, the at least one second control unit 13 may be activated to participate in the control of the steering function of the vehicle.

Here, when the first control unit 11 is completely unable to participate in the vehicle's steering control, the at least one second control unit 13 is capable of fully taking over the vehicle's steering control; when the first control unit 11 is only capable of partially participating in the vehicle's steering control, the second control unit 13 and the first control unit 11 are capable of synergistic control of the vehicle's steering function.

In addition, it should be noted that the serial numbers of the steps described herein do not necessarily represent a sequential order, but are merely reference numerals. Depending on the circumstances, the order may be changed as long as it achieves the technical objectives of the present disclosure.

Optionally, the one second control unit 13 may comprise one or more of the following components: an electronic stability program system 131, a rear-wheel steering system 132, and a torque vectoring control system 133. Depending on the different second control units the vehicle is equipped with, the control process of the vehicle steering system 1 is described in detail below in conjunction with different examples.

In one optional example of the present disclosure, the second control unit 13 may comprise an electronic stability program system 131. It is understood that currently, most vehicles are equipped with an electronic stability program system. The actuator of the electronic stability program system is a braking mechanism capable of independently braking each wheel. This braking mechanism can apply appropriate braking force to each wheel as needed, even when the driver does not engage the braking system. The brake mechanism may be a conventional hydraulic braking mechanism or a friction-based electromechanical braking mechanism that does not require a hydraulic line but instead may provide clamping force through motors arranged on brake calipers on all four wheel sides.

Under certain road surface and vehicle load conditions, the maximum adhesion that the wheels can provide is a constant value, i.e., under extreme circumstances, there exists a trade-off relationship between the longitudinal force (along the rolling direction of the wheels) and the lateral force (perpendicular to the rolling direction of the wheels) exerted on the wheels. For example, when the longitudinal force exerted on the wheels reaches an extreme value (e.g., during tire lock-up), the lateral force is 0. At this point, the vehicle's lateral movement will be uncontrollable, making it unable to turn according to the driver's steering intention. However, through the electronic stability program system, longitudinal braking force may be applied separately to each wheel. This affects the lateral force on the wheels, thereby generating a corresponding lateral torque on the vehicle and assisting it in moving in the direction desired by the driver.

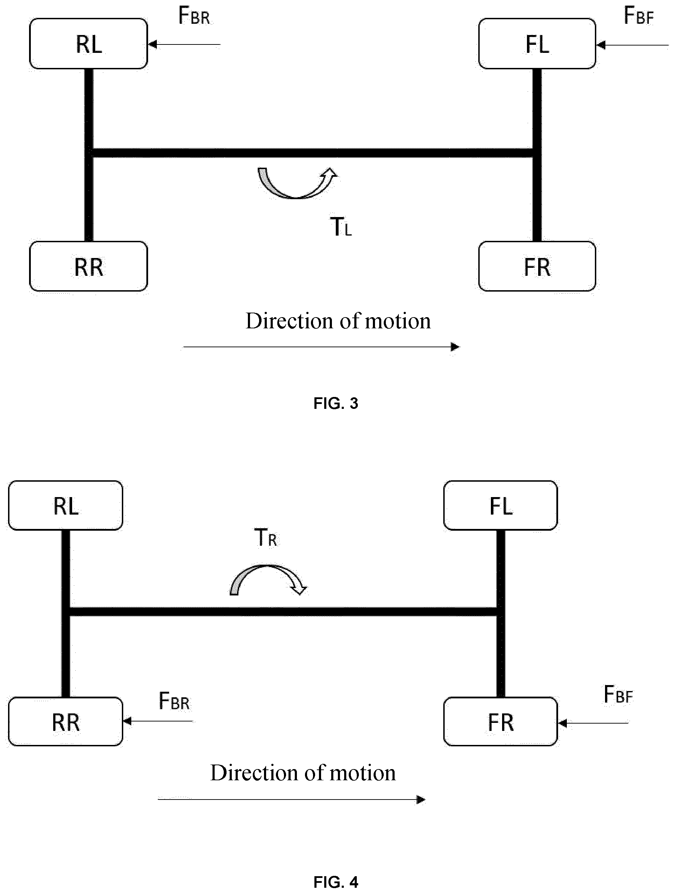

In this case, the braking torque of each wheel on the same side of the vehicle may be controlled through the electronic stability program system 131 to steer the vehicle in the desired steering direction, wherein braking force is applied separately to each wheel on the same side or one wheel on the same side using a hydraulic braking mechanism and/or a friction-based electromechanical braking mechanism. FIG. 3 shows a schematic diagram of the principle by which the electronic stability program system participates in the control of the vehicle's steering function according to another exemplary example of the present disclosure. When the driver steers the vehicle to the left, if understeer of the vehicle is detected under the control of the first control unit 11, i.e., the actual steering angle of the vehicle in a bend is smaller than the desired steering angle determined based on the driver's operational instructions, the electronic stability program system 131 may apply the longitudinal braking forces F_{BF} and F_{BR} separately to the two left-side wheels, FL and RL. Specifically, a longitudinal braking force F_{BR} is applied to the left rear wheel RL. Due to the increase in longitudinal force on the left-side wheels, their ability to provide lateral force is correspondingly reduced, thus generating a lateral torque T_{L} on the vehicle towards the desired steering direction (in this case, to the left), and assisting the vehicle in moving in the desired steering direction. It should be noted that "side" denotes the side of the vehicle along its direction of motion, which comprises the left and right sides of the vehicle body along its direction of motion.

FIG. 4 shows a schematic diagram of the principle by which the electronic stability program system participates in the control of the vehicle's steering function according to another exemplary example of the present disclosure. If oversteer of the vehicle is detected under the control of the first control unit 11, i.e., the actual steering angle of the vehicle in a bend is bigger than the desired steering angle determined based on the driver's operational instructions, the electronic stability program system 131 may apply the longitudinal braking forces F_{BF} and F_{BR} separately to the two right-side wheels, FR and RR. Specifically, a longitudinal braking force F_{BF} is applied to the right front wheel FR. Due to the increase in longitudinal force on the right-side wheels, their ability to provide lateral force is correspondingly reduced, thus generating a lateral torque T_{R} on the vehicle opposite to the desired steering direction (in this case, to the right), so as to counter the vehicle's oversteer.

In another optional example of the present disclosure, the second control unit 13 may further comprise a rear-wheel steering system 132. At present, an increasing number of vehicles are also equipped with a rear-wheel steering system. Considering that vehicles usually experience oversteer at high speeds, i.e., the actual steering angle of the vehicle in a bend is greater than the steering angle of the front wheels, the rear wheels may be controlled through the rear-wheel steering system 132 to turn in the same direction as the front wheels, thereby counteracting the vehicle's tendency to oversteer and enhancing driving stability and comfort.

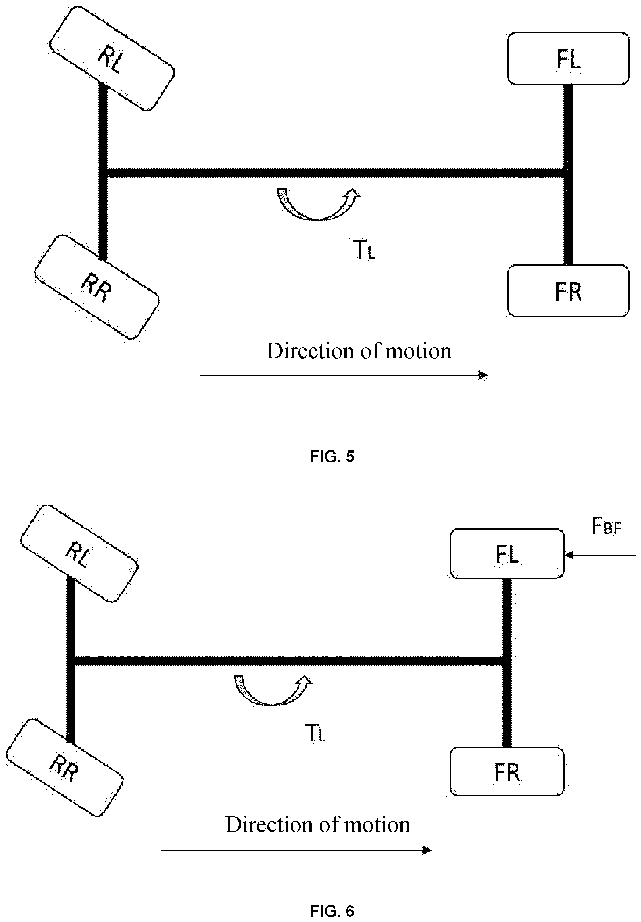

FIG. 5 shows a schematic diagram of the principle by which the rear-wheel steering system participates in the control of the vehicle's steering function according to another exemplary example of the present disclosure. Exemplarily, when the driver steers the vehicle to the left, if it is detected that the first control unit 11 cannot control the steering function of the vehicle (e.g., due to a failure in the EPS system or steer-by-wire system), as shown in FIG. 5, and the front wheels FL and FR cannot be turned to the left via the actuators, the vehicle's rear wheels RL and RR may be controlled to turn to the right via the rear-wheel steering system 132, i.e., the rear-wheel steering angle is opposite to the desired steering direction. This generates a lateral torque T_{L} on the vehicle towards the desired steering direction (in this case, to the left), realizing the steering of the vehicle to the left, thus effectively preventing the loss of steering control caused by a malfunctioning front wheel actuator, and ensuring redundancy of the steering system.

In another example shown in FIG. 6, the driving parameters and/or braking parameters of each wheel on each side of the vehicle may also be synergistically controlled by the electronic stability program 131 system and the rear-wheel steering system 132, such that the vehicle is steered towards the desired steering direction, wherein the electronic stability program system 131 applies braking force F_{BF} to the left front wheel FL, and the rear-wheel steering system 132 controls the vehicle's rear wheels RL and RR to turn to the right, i.e., the direction of the rear-wheel steering angle is opposite to the desired steering direction (in this case, to the left), thereby generating a lateral torque T_{L} on the vehicle towards the desired steering direction and realizing the steering of the vehicle to the left. Through the synergistic control of the electronic stability program system 131 and the rear-wheel steering system 132, not only can the loss of steering control caused by a malfunctioning front wheel actuator be effectively prevented, ensuring redundancy of the steering system, but the driving stability and comfort of the vehicle may also be improved.

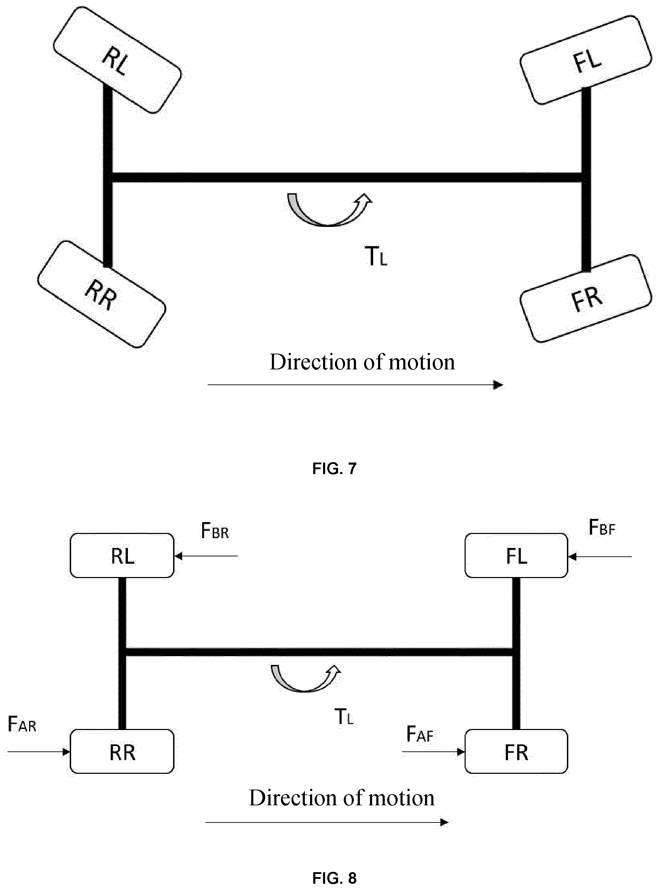

FIG. 7 shows a schematic diagram of the principle by which the rear-wheel steering system participates in the control of the vehicle's steering function according to another exemplary example of the present disclosure. Exemplarily, when the driver steers the vehicle to the left, if it is detected that the steering angle of the front wheels FL and FR is less than the desired steering angle determined based on the driver's operational instructions and cannot be further increased through the control of the first control unit 11, for example, when the vehicle deviates from the desired steering direction due to a large lateral wind force on the vehicle body, the rear wheels RL and RR may also be controlled to turn to the right via the rear-wheel steering system 132, i.e., the direction of the rear-wheel steering angle is opposite to the desired steering direction, thereby generating a lateral torque T_{L} on the vehicle towards the desired steering direction (in this case, to the left), so as to offset the effect of the lateral wind on the steering direction of the vehicle and allow the vehicle to be steered in the desired direction.

In another optional example of the present disclosure, the second control unit 13 may further comprise a torque vectoring control system 133. With the electrification of vehicles, an increasing number of electric vehicles are equipped with torque vectoring control system, which, for example, allows control of the driving and/or braking parameters of each wheel via four electric motors arranged on the four wheel sides, including torque, speed, and/or rotation direction, thereby enhancing the vehicle's operational performance, especially its steering performance.

FIG. 8 shows a schematic diagram of the principle by which the torque vectoring control system participates in the control of the vehicle's steering function according to another exemplary example of the present disclosure. Exemplarily, when the driver steers the vehicle to the left, if a malfunction (e.g., sensor failure, electronic control unit failure, steering motor failure and/or power supply unit power loss) is detected in the first control unit 11, the driving and/or braking parameters of each wheel on each side of the vehicle may be controlled via the torque vectoring control system 133. For example, the braking forces FBF and FBR may be applied separately to the two left-side wheels FL and RL, either through the torque vectoring control system 133 or the braking system, and the driving forces FAF and FAR may be applied to the two right-side wheels FR and RR via the torque vectoring control system 133, thereby generating a lateral torque TL on the vehicle towards the desired steering direction (in this case, to the left) and allow the vehicle to be steered in the desired direction.

Exemplarily, it is also possible to have only three electric motors in an electric vehicle, wherein one electric motor is arranged on the front axle for simultaneous control of the two front wheels FL and FR, and two electric motors are arranged on the rear axle to separately control the two rear wheels RL and RR. In the example shown in FIG. 7, when it is detected that the steering angle of the front wheels FL and FR is less than the desired steering angle determined based on the driver's operational instructions, which may be due to insufficient power supply to the electric motor on the front axle or limitations in the driving force of the electric motor on the front axle or may also be due to a large lateral wind force acting on the vehicle body, the driving and/or braking parameters of each wheel on each side of the vehicle may be synergistically controlled by the torque vectoring control system 133 and the electronic stability program system 131, wherein the torque vectoring control system 133 controls the driving and/or braking parameters of each wheel on each side of the vehicle, and the electronic stability program system 131 is involved in controlling the braking operations of at least one side of the vehicle's wheels. In the example shown in FIG. 8, the braking forces F_{BF} and F_{BR} may be applied separately to the left wheels FL and RL through the synergistic control of the torque vectoring control system 133 and the electronic stability program system 131, and the driving forces F_{AF} and F_{AR} may be applied separately to the right wheels FR and RR via the torque vectoring control system 133, thereby generating a lateral torque T_{L} on the vehicle towards the desired steering direction (in this case, to the left), allowing the vehicle to be steered in the desired direction and thus effectively improving the driving stability and safety of the vehicle.

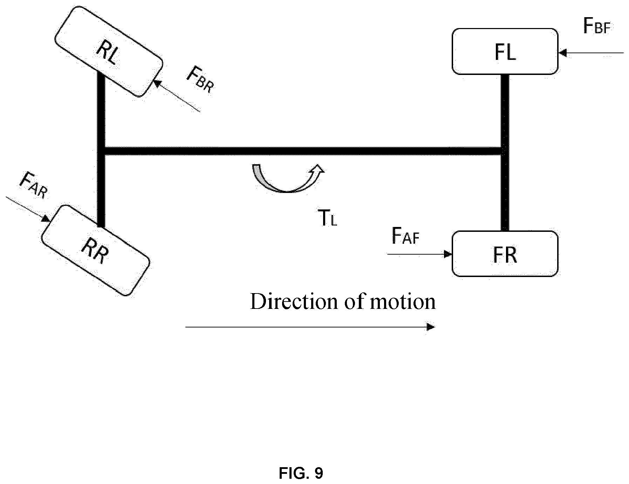

Additionally, in another example shown in FIG. 9, when the driver steers the vehicle to the left, if it is detected that the first control unit 11 is unable to control the steering function of the vehicle (e.g., due to a failure in the electric power steering system or steer-by-wire system), i.e., the front wheels FL and FR cannot be turned to the left via the actuators, the driving and/or braking parameters of each wheel on each side of the vehicle may also be synergistically controlled by the torque vectoring control system 133 and the rear-wheel steering system 132. This allows the vehicle to be steered towards the desired steering direction, wherein the torque vectoring control system 133 controls the driving and/or braking parameters of each wheel on each side of the vehicle (in this case, applying the braking forces F_{BF} and F_{BR} to the left wheels FL and FR, and applying the driving forces F_{AF} and F_{AR} to the right wheels FR and RR), and the rear-wheel steering system 132 controls the rear-wheel steering angle of the vehicle's rear wheels RL and RR (in this case, turning right), thereby generating a lateral torque T_{L} on the vehicle towards the desired steering direction (in this case, to the left) and realizing the steering of the vehicle to the left. This can more effectively prevent the loss of steering control caused by a malfunctioning front wheel actuator and achieve redundancy in the steering system.

It is to be noted that in the examples mentioned above, the electronic stability program system 131, the rear wheel steering system 132, and the torque vectoring control system 133 may all be synergistically involved in the control, thereby realizing better control effects of the vehicle's steering function.

In addition, the second control unit 13 is any vehicle-mounted component that can participate in the control of the vehicle's steering function, and is not limited to the listed electronic stability program system 131, rear-wheel steering system 132 and torque vectoring control system 133.

According to examples of the present disclosure, in case of an abnormal operational state of the vehicle's primary steering system, backup control units with steering control functions such as the electronic stability program system, rear-wheel steering system, and/or torque vectoring control system may be activated to participate in controlling the vehicle's steering function. This not only provides redundancy for high-level autonomous driving systems and/or assisted driving systems, especially achieving redundancy in steer-by-wire systems and ensuring safety when the vehicle is in motion, but it can also effectively enhance the stability and comfort of vehicle steering.

Although specific embodiments have been described above, these embodiments are not intended to limit the scope of the present disclosure, even when described with respect to specific features of individual embodiments. The examples of features provided in the present disclosure are intended to be illustrative and not limiting, unless otherwise specified. In a specific implementation, multiple features may be combined with one another as per actual requirements and when technically feasible. Various substitutions, alterations, and modifications may be conceived without departing from the spirit and scope of the present disclosure.

## Claims

1. A vehicle steering system (1) comprising:
a first control unit (11) configured to perform the steering function of a vehicle;
a status detection unit (12) configured to detect the operational state of the first control unit (11); and
and at least one second control unit (13) configured to participate in the control of the steering function of the vehicle in the event that an abnormal operational state of the first control unit (11) is detected.

2. The vehicle steering system (1) according to Claim 1, **characterized in that** the at least one second control unit (13) comprises one or more of the following components:
an electronic stability program system (131), a rear-wheel steering system (132), and a torque vectoring control system (133).

3. The vehicle steering system (1) according to any of the preceding claims, **characterized in that** the first control unit (11) comprises an electric power steering system or steer-by-wire system.

4. The vehicle steering system (1) according to any of the preceding claims, **characterized in that** the electronic stability program system (131) controls the braking torque of each wheel on the same side of the vehicle to steer the vehicle in the desired steering direction, wherein braking force is applied separately to each wheel on the same side or one wheel on the same side using a hydraulic braking mechanism and/or a friction-based electromechanical braking mechanism.

5. The vehicle steering system (1) according to any of the preceding claims, **characterized in that** when understeer is detected, the electronic stability program system (131) applies braking force to one or more wheels on the side of the desired steering direction of the vehicle, so as to apply a lateral torque to the vehicle body towards the desired steering direction; and/or
when oversteer is detected, the electronic stability program system (131) applies braking force to one or more wheels on the side opposite to the desired steering direction of the vehicle, so as to apply a lateral torque to the vehicle body in a direction opposite to the desired steering direction.

6. The vehicle steering system (1) according to any of the preceding claims, **characterized in that** the rear-wheel steering system (132) controls the rear-wheel steering angle of the vehicle, such that the vehicle is steered towards the desired steering direction, wherein the direction of the rear-wheel steering angle is opposite to the desired steering direction.

7. The vehicle steering system (1) according to any of the preceding claims, **characterized in that** the driving parameters and/or braking parameters of each wheel on each side of the vehicle are controlled through the torque vectoring control system (133), for example, braking force is applied separately to each wheel on one side of the vehicle either through the torque vectoring control system (133) or the braking system, while driving force is applied to each wheel on the other side of the vehicle through the torque vectoring control system (133), such that the vehicle is steered towards the desired steering direction.

8. The vehicle steering system (1) according to any of the preceding claims, **characterized in that** the driving parameters and/or braking parameters of each wheel on each side of the vehicle are synergistically controlled by the torque vectoring control system (133) and the electronic stability program system (131), such that the vehicle is steered towards the desired steering direction, wherein the torque vectoring control system (133) controls the driving parameters and/or braking parameters of each wheel on each side of the vehicle, and the electronic stability program system (131) participates in the control of the braking operation of each wheel on at least one side of the vehicle.

9. The vehicle steering system (1) according to any of the preceding claims, **characterized in that** the driving parameters and/or braking parameters of each wheel on each side of the vehicle is synergistically controlled by the electronic stability program system (131) and the rear-wheel steering system (132), such that the vehicle is steered towards the desired steering direction, wherein the electronic stability program system (131) controls the braking torque of each wheel on the same side of the vehicle, and the rear-wheel steering system (132) controls the rear-wheel steering angle of the vehicle.

10. The vehicle steering system (1) according to any of the preceding claims, **characterized in that** the driving parameters and/or braking parameters of each wheel on each side of the vehicle are synergistically controlled by the torque vectoring control system (133) and the rear-wheel steering system (132), such that the vehicle is steered towards the desired steering direction, wherein the torque vectoring control system (133) controls the driving parameters and/or braking parameters of each wheel on each side of the vehicle, and the rear-wheel steering system (132) controls the rear-wheel steering angle of the vehicle.

11. The vehicle steering system (1) according to any of the preceding claims, **characterized in that** the desired steering direction is determined according to the driver's operational instructions and/or determined according to an autonomous driving system and/or an assisted driving system based on the current driving scenario.

12. A method for controlling vehicle steering, wherein the method is executed using the vehicle steering system (1) according to any one of Claims 1 to 11, and the method comprises the following steps:
detecting the operational state of the first control unit (11) used to perform the steering function of the vehicle;
determining whether there is an abnormal operational state of the first control unit (11); and
if an abnormal operational state of the first control unit (11) is detected, activating at least one second control unit (13) to participate in controlling the steering function of the vehicle.

13. A computer program product, such as a computer-readable program carrier comprising computer program instructions, wherein the execution of the computer program instructions by a processor at least assists in implementing the steps of the method according to any of Claims 1 to 11.
